Europäisches Patentamt

European Patent Office

Office européen des brevets

(19)

(11) Veröffentlichungsnummer: **0 138 764**
A2

(12) **EUROPÄISCHE PATENTANMELDUNG**

(21) Anmeldenummer: 84810474.1

(22) Anmeldetag: 01.10.84

(51) Int. Cl.⁴: **F 16 C 39/02**

(30) Priorität: 17.10.83 CH 5636/83

(43) Veröffentlichungstag der Anmeldung: 24.04.85
Patentblatt 85/17

(84) Benannte Vertragsstaaten: AT BE CH DE FR GB IT LI NL SE

(71) Anmelder: SCHWEIZERISCHE ALUMINIUM AG,
CH-3965 Chippis (CH)

(72) Erfinder: Attinger, Urs, Riedacherstrasse 19,
CH-8173 Riedt/Neerach (CH)
Erfinder: Lütschg, Serge, Reinhold-Frei-Strasse 65,
Ch-8049 Zürich (CH)

(54) Lagervorrichtung für Radachsen.

(57) Bei einer Lagervorrichtung für Radachsen (1), insbesondere für Radsatzwellen eines Drehgestells von Eisenbahnwagen, umfängt ein Achslagergehäuse ein Radlager (R), welches aus einem der Radachse aufgeschobenen Innenring (8) sowie einem diesen Innenring (8) umfassenden weiteren äusseren Ring mit zwischen beiden Ringen angeordneten Zylinderrollen, Kugeln od. dgl. besteht, wobei der Innenring durch eine auf die Radachse aufgeschraubte Endmutter gesichert ist.

Zwischen dem Radlager (R) und dem Achslagergehäuse (3) und/oder der Endmutter (9) sind Kraftspeicher (14 und/oder 27 und/oder 38) zur Aufnahme von auf das Radlager (R) in Gebrauchslage einwirkenden Kräften angeordnet.

Lagervorrichtung für Radachsen

---

Die Erfindung betrifft eine Lagervorrichtung für Radachsen, insbesondere für Radsatzwellen eines Drehgestells von Eisenbahnwagen, mit einem von einem Achslagergehäuse umfangenen Radlager, welches aus einem auf der Radachse aufgeschobenen Innenring sowie einem diesen Innenring umfassenden weiteren äusseren Ring mit zwischen beiden Ringen angeordneten Zylinderrollen, Kugeln od. dgl. besteht, wobei der Innenring durch eine auf die Radachse aufgeschraubte Endmutter gesichert ist.

Lagervorrichtungen für Radachsen, insbesondere für Radsatzwellen bei Schienenfahrzeugen, sind bekanntlich als Aussenlager oder als Innenlager ausgebildet. Aussenlager sitzen ausserhalb der beiden Räder auf der Achswelle, Innenlager sind dagegen zwischen den Rädern auf der Achswelle angeordnet. Konstruktiv werden insbesondere Gleitlager und Wälzlager unterschieden. Sie haben die Aufgabe, das in senkrechter Richtung wirkende Gewicht des auf dem Lager abgestützten Fahrzeugteils, die in Querrichtung durch die Führung des Fahrzeugs im Gleis entstehenden Kräfte und die in Längsrichtung wirkenden Zug- und Bremskräfte zu übertragen.

Diese auf das Achslager einwirkenden Kräfte werden üblicherweise ungefedert auf das Achslagergehäuse übertragen. Als Hauptlager werden unter anderem Zylinderrollenlager verwendet, welche einerseits auf einem die Achswelle umfassenden Innenring, andererseits auf einem am Lagergehäuse

festgelegten Aussenring abrollen. Diese üblichen Rollenlager lassen keine Winkelverstellung zwischen Achslager und Achse zu.

Der Erfinder hat sich zum Ziel gesetzt, eine Lagervorrichtung für Radachsen zu entwickeln, welche die auf das Radlager einwirkenden Kräfte abfedert. Zudem soll eine Gelenkigkeit zwischen Achse und Achslagergehäuse herstellbar sein, d.h. die Achse soll sich im Verhältnis zum Achslagergehäuse innerhalb eines relativ grossen Winkels bewegen können.

Zur Lösung dieser Aufgabe führt, dass zwischen dem Radlager und dem Achslagergehäuse und/oder der Endmutter Kraftspeicher zur Aufnahme von auf das Radlager in Gebrauchslage einwirkenden Kräfte angeordnet sind.

Der eine Kraftspreicher besteht aus einer Tellerfeder, welche sich einerseits gegen die Endmutter und andererseits gegen einen Stützring abstützt. Sie hält auf diese Weise den Stützring in Abstand von der Endmutter. Der Stützring selbst übergreift mit einer Schulter den Innenring, wobei die Berührungsfläche beider Ringe als Gleitfläche ausgebildet ist.

Das Zusammenwirken von Innenring, Stützring, Tellerfeder und Endmutter dient insbesondere dem Abfedern von axialen Stössen, welche beispielsweise in Kurven infolge der Zentrifugalkraft auf das Radlager einwirken.

Nach einer weiteren Verbesserung, welche insbesondere die Herstellung einer Gelenkigkeit zwischen Achse und Lagergehäuse betrifft, soll der üblicherweise vorgesehene Aussenring des Radlagers als Mittelring ausgebildet sein, dem dann ein zusätzlicher Aussenring aufsitzt. Dieser Aussenring stützt sich über Kraftspeicher gegen das Lagergehäuse oder Teile des Lagergehäuses ab.

Zur Herstellung eines gelenkartigen Lagers zwischen Mittelring und Aussenring ist die Kontaktfläche beider Ringe kugelförmig gewölbt. Zur Begrenzung des Bewegungsbereiches beider Ringe zueinander und auch zur Festlegung ragen Stifte aus der kugelförmigen Oberfläche des Mittelringes in Bohrungen in den Aussenring ein, wobei der Durchmesser der Bohrungen grösser ist als der Durchmesser der Stifte. Hierdurch wird der Bewegungsspielraum der beiden Ringe zueinander begrenzt, da die Stifte nach einer gewissen Gelenkbewegung an den Innenseiten der Bohrungen anschlagen.

Die oben genannten Kraftspeicher des Aussenringes bestehen bevorzugt aus elastischen Werkstücken, insbesondere gummiartigen Elementen.

Bei einer weiter verbesserten Ausführungsform der Erfindung soll am Mittelring einerseits ein Gegenring und andererseits ein Haltering angeflanscht sein. Dabei ist zwischen dem Gegenring und dem Gehäuseteil sowie zwischen dem Haltering und dem Spannring jeweils eine Ringöffnung ausgebildet, welche von einer Membran überbrückt wird. Diese Membran schützt die Gleitfläche zwischen Aussenring und Mittelring vor Verschmutzung und lässt gleichzeitig die geforderte Bewegung beider Ringe zueinander zu. Der Gegenring ist dabei mit dem Labyrinth-Ring und der Haltering mit dem Stützring jeweils über einen Filzring od.dgl. elastische und abdichtende Ringe bzw. ineinander greifende Ringteile verbunden. Das bedeutet, dass diese Ringe berührungslos bei der Bewegung der Achse in dem Radlager zusammenspielen.

Bei einer weiteren Lösungsmöglichkeit der Aufgabe bzw. Verbesserung der bisher aufgezeigten Ausführungsform sollen insbesondere die vertikalen Kräfte aufgefangen werden. Hierzu ist erfindungsgemäss auf den als Mittelring ausgebildeten Ring ein Federring aus zwei Schalen aufgeschoben. Zwischen diesen beiden Schalen sind zumindest an den vertikalen Polen des Radlagers Kraftspeicher eingelagert.

Um jedoch sowohl axial als auch vertikal einwirkende Kräfte aufzufangen, soll dem Aussenring mit seinen elastischen Werkstücken und der Anordnung mit der Tellerfeder der oben beschriebene Federring aufsitzen.

Erfindungsgemäss besteht der Kraftspeicher zwischen den beiden Schalen des Federrings aus jeweils beidseits der vertikalen Pole eingelagerten Werkstoffstreifen aus elastischem Material. Hierzu dienen einfache Gummistreifen. Diese weisen im vorliegenden Fall eine Steifigkeit bzw. einen Quetschbereich auf, welcher etwa bei 10 Tonnen pro Millimeter liegt. Durch diese Streifen werden auch die in Längsrichtung wirkenden Zug- bzw. Bremskräfte abgefedert, wobei gegebenenfalls auch an den waagrechten Polen des Radlagers zusätzliche elastische Werkstoffstreifen zwischen die beiden Schalen des Federringes eingelagert werden können.

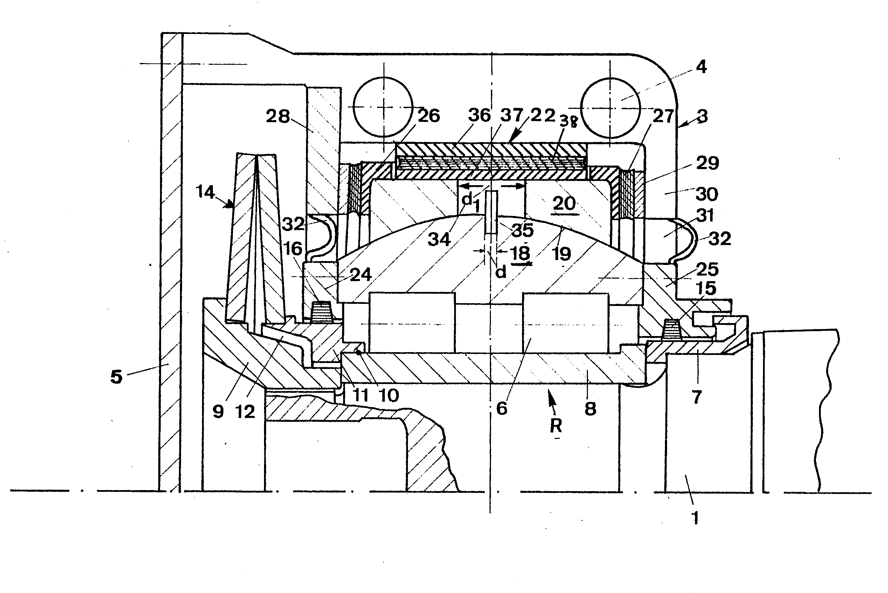

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in ihrer einzigen Figur eine Hälfte eines teilweise dargestellten Querschnitts durch ein Achslager für Schienenfahrzeuge.

Bei einem Drehgestell, insbesondere für Schienenfahrzeuge, sind -- nicht dargestellt -- zwei Radsatzwellen über Schwingen miteinander gekoppelt. Jede dieser Radsatzwellen 1 lagert in einem von einem Gehäuse 3 umgebenen Radlager R. Das Gehäuse 3 besteht dabei gewöhnlich aus zwei Lagerhalbschalen, welche über in Bohrungen 4 einführbare -- nicht dargestellte -- Schraubenbolzen miteinander fest verbunden sind.

Nach aussen wird das Radlager R durch einen Lagerdeckel 5 abgedeckt. Das Rad selbst ist -- nicht dargestellt -- jenseits des Lagerdeckels 5 an der Radsatzwelle 1 angeordnet.

Die Radsatzwelle 1 läuft auf einem aus Zylinderrollen 6 bestehenden Zylinderrollenlager.

Die mitlaufenden Teile sind einmal ein auf die Radsatzwelle 1 aufgeschobener Labyrinth-Ring 7 und ein Innenring 8. Beide Teile 7 und 8 werden durch eine Wellenendmutter 9 gesichert. Gegenüber dem Labyrinth-Ring 7 sitzt dem Innenring 8 mit einer Gleitfläche 10 ein Stützring 11 auf, welcher einen lichten Abstand 12 zu der Wellenendmutter 9 einhält und gegen letztere über eine Tellerfeder 14 abgestützt ist.

Zwischen dem Stützring 11 und dem Labyrinth-Ring 7 ist der Innenring 8 mit den Zylinderrollen 6 besetzt.

Der Abdichtung der mitlaufenden Teile gegenüber den festliegenden Elemente dienen Filzringe 15 und 16, welche an dem Labyrinth-Ring 7 und dem Stützring 11 angeordnet sind.

Die im Gehäuse 3 festliegenden Teile sind im wesentlichen ein Mittelring 18 mit einer kugelförmigen Oberfläche 19, ein dieser Oberfläche 19 aufsitzender Aussenring 20 sowie ein darüber angeordneter Federring 22.

Dem Mittelring 18 sind, verbunden über -- nicht dargestellte -- Schraubenbolzen, ein Haltering 24 und ein mit dem Labyrinth-Ring 7 berührungsfrei teilweise in Eingriff stehender Gegenring 25 angeflanscht.

Der Aussenring 20 wird beidseits von jeweils einem Ring-Federelement 26 gehalten, welche sich über Gummistücke 27 einerseits gegen das Gehäuse 3, andererseits gegen ein mit dem Gehäuse 3 verbundenen Spannring 28 unter Zwischenlagerung von Ringscheiben 29 abstützen.

Sowohl Haltering 24 als auch Gegenring 25 bilden mit dem ihnen zugeordneten Spannring 28 bzw. einem abgekröpften Genäuseteil 30 eine Ringöffnung 31, welche jeweils von elastischen Membranen 32 abgedeckt sind.

Der Mittelring 18 kann sich im Verhältnis zum Aussenring 20 bewegen, wobei der Bewegungsspielraum von aus der Oberfläche 19 in Bohrungen 34 des Aussenrings 20 einragende Stifte 35 begrenzt ist. Diese Bohrungen 34 weisen einen Innendurchmesser $d_1$ auf, welcher grösser ist als der Durchmesser d der Stifte 35. Der Unterschied beider Durchmesser bestimmt den Bewegungsspielraum von Mittelring 18 zu Aussenring 20.

Der Federring 22 besteht aus zwei Schalen 36 und 37, wobei zwischen die beiden Schalen 36 und 37 jeweils an den vertikalen Polen des Radlagers R weitere Gummistücke 38 eingelagert sind.

00138764

PATENTANSPRUECHE

1. Lagervorrichtung für Radachsen, insbesondere für Radsatzwellen eines Drehgestells von Eisenbahnwagen, mit einem von einem Achslagergehäuse umfangenen Radlager, welches aus einem der Radachse aufgeschobenen Innenring sowie einem diesen Innenring umfassenden weiteren äusseren Ring mit zwischen beiden Ringen angeordneten Zylinderrollen, Kugeln od. dgl. besteht, wobei der Innenring durch eine auf die Radachse aufgeschraubte Endmutter gesichert ist,

dadurch gekennzeichnet,

dass zwischen dem Radlager (R) und dem Achslagergehäuse (3) und/oder der Endmutter (9) Kraftspeicher (14 und/oder 27 und/oder 38) zur Aufnahme von auf das Radlager (R) in Gebrauchslage einwirkenden Kräften angeordnet sind.

2. Vorrichtung nach Anspruch 1, dadurch gekennzeichnet, dass der Kraftspeicher (14) aus einer Tellerfeder besteht, welche sich einerseits gegen die Endmutter (9) andererseits gegen einen Stützring (11) abstützt, welcher mit einer Schulter den Innenring (8) übergreift und zum Innenring (8) hin eine Gleitfläche (10) aufweist.

3. Vorrichtung nach Anspruch 1 oder 2, dadurch gekennzeichnet, dass der den Innenring (8) umfassende Ring als Mittelring (18) ausgebildet ist, dem ein Aussenring (20) aufsitzt, der sich über Kraftspeicher (27) gegen das Gehäuse (3) bzw. einen Gehäuseteil (30) und einen am Gehäuse festliegenden Spannring (28) abstützt, wobei beide Ringe (18, 20) in einem begrenzten Bereich zueinander bewegbar sind und so eine Gelenkigkeit zwischen Achse (1) und Achslagergehäuse (3) gegeben ist.

4. Vorrichtung nach Anspruch 3, dadurch gekennzeichnet, dass der Aussenring (20) auf einer kugelförmigen Oberfläche (19) des Ringes (18) sitzt, aus welcher Stifte (35) in Bohrungen (34) des Aussenringes (20) einragen, wobei der Durchmesser ($d_1$) der Bohrungen (34) grösser ist als der Durchmesser (d) der Stifte (35).

5. Vorrichtung nach Anspruch 3 oder 4, dadurch gekennzeichnet, dass der Mittelring (18) einerseits in einem Gegenring (25), andererseits in einem Haltering (24) lagert, wobei zwischen dem Gegenring (25) und dem Gehäuseteil (30) sowie dem Haltering (24) und dem Spannring (28) jeweils eine Ringöffnung (31) ausgebildet und von einer Membran (32) überbrückt ist.

6. Vorrichtung nach den Ansprüchen 2 und 5, dadurch gekennzeichnet, dass mit dem Haltering (24) der Stützring (11) über einen Filzring (16) od. dgl. verbunden ist.

7. Vorrichtung nach Anspruch 1, dadurch gekennzeichnet, dass zur Aufnahme insbesondere der vertikalen Kräfte einem den Innenring (8) umfassenden Mittelring (18) ein Federring (22) aus zwei Schalen (36, 37) aufsitzt, zwischen denen zumindest an den vertikalen Polen des Radlagers (R) Kraftspeicher (38) eingelagert sind.

00138764

8. Vorrichtung nach wenigstens einem der Ansprüche 2 bis 7
   dadurch gekennzeichnet, dass dem Aussenring (20) ein
   Federring (22) aus zwei Schalen (36 und 37) aufsitzt,
   zwischen denen zumindest an den vertikalen Polen des
   Radlagers (R) Kraftspeicher (38) eingelagert sind.

9. Vorrichtung nach Anspruch 7 oder 8, dadurch gekennzeichnet, dass die Kraftspeicher (38) aus zumindest
   zwei jeweils beidseits der vertikalen Pole eingelagerten Werkstoffstreifen aus elastischem Material bestehen.